(19) **Europäisches Patentamt / European Patent Office / Office européen des brevets**

(11) **EP 3 297 156 B1**

(12) **EUROPEAN PATENT SPECIFICATION**

(45) Date of publication and mention of the grant of the patent:
**19.06.2024 Bulletin 2024/25**

(21) Application number: **17189021.3**

(22) Date of filing: **01.09.2017**

(51) International Patent Classification (IPC):
**H02P 29/50** (2016.01)     **H02P 6/10** (2006.01)

(52) Cooperative Patent Classification (CPC):
**H02P 29/50; H02P 6/10**

(54) **TORQUE RIPPLE REDUCTION FOR A GENERATOR**

REDUZIERUNG DER DREHMOMENTWELLIGKEIT FÜR EINEN GENERATOR

RÉDUCTION D'ONDULATION DE COUPLE POUR UN GÉNÉRATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2016 DE 102016217760**

(43) Date of publication of application:
**21.03.2018 Bulletin 2018/12**

(73) Proprietor: **Siemens Gamesa Renewable Energy A/S**
**7330 Brande (DK)**

(72) Inventors:
• **Deng, Heng**
  **7430 Ikast (DK)**
• **Xie, Ge**
  **7100 Vejle (DK)**

(74) Representative: **SGRE-Association**
**Siemens Energy Global GmbH & Co. KG**
**SE I IM P Intellectual Property**
**Siemenspromenade 9**
**91058 Erlangen (DE)**

(56) References cited:
**EP-A1- 0 239 806     EP-A1- 2 552 013**
**EP-A1- 3 076 542     EP-A2- 1 643 122**

## Description

Field of invention

The present invention relates to a method and to an arrangement for controlling a generator to reduce a harmonic torque ripple. Further, the invention relates to a wind turbine comprising a generator and the arrangement for controlling the generator to reduce a harmonic torque ripple.

Art Background

EP 2 552 013 A1 discloses a reduction of noise and vibrations of an electromechanical transducer by using a modified stator coil drive signal comprising harmonic components. In first and seconds periods of time, respective first and second strength of the harmonic operational behaviour of the transducer is determined and a harmonic control signal is calculated based on the strength based on which a modified drive signal is generated and supplied to electromagnetic coils of the stator of the transducer.

EP 1 643 122 A2 discloses a vibration damping system and method for variable speed wind turbines, wherein a variable signal is provided to control torque produced by a generator, wherein the variable signal is based on generator speed and has a first local peak value based on a resonant frequency of tower side-to-side oscillation.

EP 0 239 806 A1 discloses an apparatus for stabilizing turbine-generator shaft torsional oscillations wherein a sub-synchronous component and a super-synchronous component of the fundamental frequency of the generator is detected.

A wind turbine may comprise a rotor shaft with blades connected thereto and may comprise a generator, in particular a high power permanent magnet synchronous machine having a generator rotor which is mechanically connected to the rotor shaft.

Conventionally, torque ripple control may be a big challenge for a high power permanent magnet synchronous machine. The torque of the machine cannot be measured or estimated precisely, which applies in particular to harmonics of the torque. Therefore, conventionally, the torque ripple itself, e.g. higher harmonics of the torque, cannot be used as a feedback in a controller.

Conventionally, one approach to minimize the torque ripple may be to inject a corresponding frequency harmonic current on the q-axis, and force the d-axis harmonic current to be zero at the meantime. Current injection may for example be achieved by appropriately controlling a converter having high power input terminals connected with high power output terminals of the generator, in particular permanent magnet synchronous machine. For example, for minimizing the 6f (six times the fundamental frequency of the electrical machine) torque ripple, a 6f harmonic current may be injected on the q-axis as a reference and the 6f harmonic d-axis current may be set to zero. Further, the 6f $I_q$ may be controlled as the reference by a PI controller. However, in this approach, the amplitude and the phase angle of the reference harmonic current may change due to different operating conditions. Therefore, the fixed parameters are not reliable for the long-term operating torque ripple controller according to the conventional art.

Another conventional approach to control the torque ripple may be using a measurement signal (for example strain gauge or microphone) as the feedback signal. The strain gauge can provide a reliable feedback but also increases the cost due to its high price. The microphone measured signal may contain a big delay which the normal controller may not be able to handle.

Thus, there may be a need for a method and arrangement for controlling a generator to reduce a harmonic torque ripple, wherein at least some of the disadvantages of the prior art are reduced or even overcome. In particular, there may be a need for a method and arrangement of controlling a generator to reduce a harmonic torque ripple, which works reliably under different operating conditions of the generator.

Summary of the Invention

This need may be met by the subject matter according to the independent claims. Advantageous embodiments of the present invention are described by the dependent claims.

According the present invention it is provided a method of controlling a generator to reduce a harmonic torque ripple according to claim 1.

It may be possible to use measurement or estimation of torque, acoustic noise and/or vibration as feedback source.

The method may be implemented in hardware and/or software and may in particular be performed by a wind turbine controller or in general a generator controller. The generator may in particular be or comprise a permanent magnet synchronous machine, in which plural permanent magnets are attached to a rotor which rotates relative to a stator, the stator having at least one set of stator windings, for example one or more sets of three-phase stator windings.

The generator may be comprised in a wind turbine.

The mechanic vibration of the generator comprises or includes one or more higher harmonics of a fundamental electrical frequency of the generator. For measuring the mechanic vibration, for example a accelerometer may be used. It is possible to use microphone to measure corresponding acoustic noise or use strain gauge to measure torque ripple directly. Torque ripple can be estimated from other electrical measurements of the generator. The estimated torque ripple could be used to indicate the mechanic vibration as well. The vibration signal may be an electric and/or optical signal or an electromagnetic wave signal and may be indicative of the mechanic vibration of the generator.

The operating point may define an operating condition of the generator, in particular in terms of one or more operating parameters. In particular, two operating parameters, such as the fundamental torque generated by the generator and the electrical frequency (also referred to as fundamental frequency) of the generator may be appropriate operating parameters to characterize the operating point. It is also possible to use other operating parameters to define operating points, for example, turbine power, generator power, rotor speed and generator mechanical frequency etc. Embodiments of the present invention may define one or more operating regions or ranges, for example a region in a two-dimensional (or higher-dimensional) coordinate system in which two or more operating parameters are indicated on the axis of the coordinate system. A particular operating region may be defined as the two-dimensional or higher-dimensional range for which one or more operating parameters deviate less from one or more center values by a predetermined deviation. Thereby, it becomes possible to control the generator regarding reduction of a harmonic torque ripple in dependence of the operating point or operating region the generator is operating in. Thereby, the harmonic torque ripple reduction may be more effective, thereby in turn improving the performance of the generator and further reducing wear and damage of components of the converter.

The amplitude and the phase of a reference harmonic current (in particular representing a current to be injected in order to reduce a particular harmonic of the torque ripple) may be derived in dependence and/or associated with the value of the operating point. The reference harmonic current may be described as a trigonometric function, for example a sine function or a cosine function having as argument a particular harmonic of the fundamental frequency of the generator and further having a phase. In particular, the argument of the trigonometric function may be a sum of a particular harmonic (such as 2, 4, 6 or even higher) times the electrical angle of the generator added by the phase value. The trigonometric function may be multiplied by the amplitude as derived according to embodiments of the present invention, for defining the reference harmonic current.

One or more harmonic torque ripples or one or more harmonics of torque ripples may be reduced according to embodiments of the present invention. For each harmonic of the torque ripple to be reduced, a respective reference harmonic current may be associated and finally also injected into the generator. In particular, when one or more harmonics of the torque ripple are desired to be reduced, a current may be injected into the generator based on one or more reference harmonic currents (which may in particular derived independently and added together). Since embodiments of the present invention take into account the operating region or operating point, the generator is operating in, the reduction of harmonic torque ripples may be improved.

The method may in particular be performed repeatedly over time. Thereby, the mechanic vibration may be (for example continuously or in a sampled manner) measured and also the operating point the generator is operating in may be continuously or in a sampled manner determined. In turn, the amplitude and phase may repeatedly be derived based on the respective vibration signal measured in the respective time and the value of the operating at the corresponding time. Further, continuously or repeatedly or in a sampled manner, a current may be derived which is based on the reference harmonic current and the current may be injected into the generator.

The current which is injected may not only be determined based on the reference harmonic current but may further be determined based on other reference values, such as a reference fundamental current.

The injecting the current may be performed by appropriately controlling for example a converter of the generator, wherein converter power input terminals may be connected to power output terminals of the generator. The converter may in particular comprise or be an AC-DC-AC converter which may be adapted to convert a variable frequency power stream (e.g. output from the generator) to a fixed frequency power stream. The converter may in particular comprise a number of high power switches, such as IGBTs or any other suitable transistors, which may be driven by gate driver circuits.

According to the present invention, the value of the operating point is determined based on a, in particular, measured fundamental torque and a, in particular measured, rotational speed of the generator. The fundamental torque and the rotational speed of the generator (the rotational speed also referred to as frequency of the generator) may be appropriate operating parameters to define the working point or the working range the generator is operating in. In particular, depending on the thus defined working point or working range, the amplitude and the phase of the reference harmonic current may vary. Thus, it is reasonable and effective, to derive amplitude and phase of the reference harmonic current in dependence of the working range or working point the generator is operating in.

According to the present invention, the value of the operating point is determined by examining a torque difference between the fundamental torque and at least one of a plurality of predetermined fundamental torques and by examining a speed difference between the rotational speed and at least one of a plurality of predetermined rotational speeds for a predefined period.

If for example the torque difference is smaller than a torque different threshold within the predefined period, the generator may be assigned to the operating in a particular torque range. Similarly, if the speed difference is smaller than a particular speed difference threshold within the predefined period, the generator may be assigned to be operating in a particular speed range. A rectangle spanned by the torque range and the speed range may define a two-dimensional region representing the operating range. A plurality of such rectangular regions may be predefined and may represent plural operating ranges which are of interest and which give rise to different amplitude and phase in dependence of in which operating range or point the generator is operating in. Thereby, the method may further be improved for more effectively reducing a particular harmonic torque ripple.

According to the present invention, the method further comprises assuring an enable signal, if an absolute value of the torque difference is smaller than a predetermined torque difference and if an absolute value of the speed difference is smaller than a predetermined speed difference within the predefined period.

The enable signal may indicate, that the generator is currently operating in one of the predetermined operating ranges. Thereby, the derived amplitude and phase of the reference harmonic current may effectively be attributed or associated with the thus known operating range the generator is operating in. The predetermined torque difference (also referred to as predetermined torque difference threshold) and the predetermined speed difference (also referred to as predetermined speed difference threshold) may be selected or chosen depending on the application and the construction, geometry and size of the generator.

According to an embodiment of the present invention, the value of the operating point is characterized by that one predetermined fundamental torque of the plurality of predetermined fundamental torques for which the absolute value of the torque difference is smaller than the predetermined torque difference and by that one predetermined rotational speed of the plurality of predetermined rotational speeds for which the absolute value of the speed difference is smaller than the predetermined speed difference.

Thereby, an effective way to characterize the operating point may be provided. Further, storing the amplitude and/or the phase of the reference harmonic current in association of the operating point may thereby be simplified. Thereby, in particular, the predetermined fundamental torque and/or the predetermined rotational speed may define centers of rectangular working range regions. The amplitude and the phase of the derived reference harmonic current may simply be stored in association with the respective predetermined fundamental torque and predetermined rotational speed being the center of the particular operating range the generator is operating in.

According to the present invention, deriving the amplitude and the phase of the reference harmonic current comprises filtering the vibration signal thereby reducing components of the vibration signal other than a particular harmonic (of interest to be reduced) to obtain a filtered vibration signal, in particular time averaging the RMS value of filtered vibration signal, looking up an initial amplitude and an initial phase associated with the value of the operating point from a storage, performing an optimization of the amplitude and phase based on the initial amplitude and the initial phase so that the vibration signal is reduced, in particular minimized, and storing, associated with the value of the operating point, the optimized amplitude and optimized phase in a storage.

The vibration signal may comprise plural frequency components, such as a component of a fundamental frequency and one or more harmonics of the fundamental frequency. The filtering (using an analogue and/or digital filter) the vibration signal may be performed to reduce non-interesting frequency components, but to pass through at least one frequency component which is desired to be reduced in the torque ripple.

The filtered vibration signal is AC signal. RMS value of the AC signal may be used instead of the AC signal itself.

The optional time averaging may further reduce noise in the filtered vibration signal.

A look-up table of the initial amplitude and initial phase (associated or corresponding to the particular working point) is provided or is accessible in an electronic storage. The initial values for amplitude and phase may have been determined previously, for example by performing controller tuning involving simulations and/or experimental tests. However, the initial amplitude and initial phase may not properly reflect the correct value for the reference harmonic current to be injected to reduce the torque ripple, but other values may be more effective for reducing the harmonic torque ripple. Therefore, starting from these initial values, an optimization is performed, wherein amplitude and/or phase is varied with the aim of reducing the mechanic vibration of one or more desired harmonics, as is reflected by the vibration signal which may represent a feedback during the optimization. The optimized amplitude and phase are then also stored, for example in an electronic storage, for future use and also for the use to derive the current based on the reference harmonic current which may then finally be injected into the generator.

According to an embodiment of the present invention, performing the optimization may comprise performing an optimization of the amplitude starting from the initial amplitude using a gradient scheme aiming to reduce the filtered vibration signal, and performing, in particular independently from performing the optimization of the amplitude, an optimization of the phase starting from the initial phase using a gradient scheme aiming to reduce the filtered vibration signal.

First, the optimization of the amplitude is performed and then, independently therefrom, the optimization of the phase is performed, thereby applying the optimized amplitude (or the initial amplitude e.g.). If the vibration signal indicates that the vibration (at the particular harmonic to be reduced) is reduced, the amplitude and/or the phase may be even further changed (in particular in the same direction) trying to further reduce the mechanic vibration at the particular harmonic of interest. Other optimization schemes are possible.

According to an embodiment of the present invention, performing the optimization of the amplitude and/or phase continues, if the enable signal is assured, over a time duration longer than a delay of the vibration signal, wherein during the time duration the vibration signal is received repeatedly.

The vibration signal may indicate or represent the mechanic vibration at a time point before the vibration signal is actually generated or at least received by the controller. Thus, the vibration signal may not reflect the actual mechanic vibration of the generator but may reflect the mechanic vibration previously, i.e. a little bit in the past. However, according to embodiments of the present invention, the optimization may endure longer than the delay of the vibration signal. Thus, problems related to the delay of a microphone signal, as observed in the prior art, may at least be partially overcome.

According to an embodiment of the present invention, if the value of the operating point changes, during performing the optimization of the amplitude and/or phase, from a first value to a second value, the optimizations associated to the first value of the operating point are terminated and a last value of the amplitude and a last value of the phase obtained by the optimizations are stored in the storage.

Thereby, it may be ensured to always determine and store the amplitude and phase of the reference harmonic current in association with the actual working point or working range the generator is working or operating in.

According to an embodiment of the present invention, the method further comprises performing optimizations of the amplitude and/or phase associated with the second value of the operating point and/or applying a limitation of the optimized amplitude and/or phase.

Applying the limitation may ensure that the amplitude and/or phase are in a safe region, for avoiding damage of components of the generator.

According to an embodiment of the present invention, injecting the current into the generator comprises determining a reference harmonic voltage based on the reference harmonic current and an actual current in at least one stator winding, each the reference harmonic current and the actual current in particular represented by components in a dq-coordinate system, forming a sum of the reference harmonic voltage and a reference fundamental voltage, and supplying the sum as reference voltage to a control input of a converter having power input terminals connected to power output terminals of the generator.

The reference harmonic voltage may represent a voltage reference to be supplied to a converter which may be effective for reducing the harmonic torque ripple of the particular harmonics. From the voltage reference the converter may derive pulse width modulation signals which may control conducting states of the power switches, thereby achieving to generate an output voltage at converter power output terminals corresponding (or being at least substantially equal) to the voltage reference.

The reference fundamental voltage may represent a desired voltage at the fundamental frequency to be output by the generator, without considering any high harmonics of the output voltage. When both the reference fundamental voltage and the reference harmonic voltage are summed and supplied to a driver or to a converter, the converter may switch its power switches such as to both, achieve the fundamental voltage close to the reference fundamental voltage and also inject a harmonic current such that the harmonic voltage is close to the reference harmonic voltage, thereby reducing torque ripples.

According to an embodiment of the present invention, the method may further comprise determining the reference fundamental voltage based on the actual current in the at least one stator winding of the generator and a reference fundamental current, and/or wherein the vibration signal is generated by a microphone and/or a strain gauge.

The reference fundamental current may be received from a park controller or wind park controller or from a provider or operator of the utility grid the generator is (e.g. via the converter) connected to. The vibration signal may be generated by other sensors or means.

It should be understood that features individually or in any combination disclosed, described, provided or applied to a method of operating a generator may also be applied, individually or in any combination, to an arrangement for controlling a generator according to embodiments of the present invention and vice versa.

According to the present invention it is provided an arrangement for controlling a generator to reduce a harmonic torque ripple according to claim 12.

The driver may in particular be configured as an AC-DC-AC converter.

According to the present invention it is provided a wind turbine according to claim 13, comprising a shaft with rotor blades connected thereto, a generator mechanically coupled with the shaft, and an arrangement according to one of the preceding embodiments, the driver in particular configured as a converter that is controlled based on the reference harmonic current.

Embodiments of the present invention are now described with reference to the accompanying drawings. The invention is not restricted to the illustrated or described embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Fig. 1 schematically illustrates a wind turbine according to an embodiment of the present invention including an arrangement for controlling a generator according to an embodiment of the present invention;

Fig. 2 schematically illustrates an arrangement for controlling a generator according to an embodiment of the present invention;

Fig. 3 schematically illustrates a harmonic current reference calculation module according to an embodiment of the present invention which may be comprised in the arrangement illustrated in Fig. 2; and

Fig. 4 schematically illustrates an auto-tuning scheme according to an embodiment of the present invention, for example performed by the harmonic current reference calculation module illustrated in Fig. 3.

Detailed Description

The illustration in the drawings is in schematic form. It is noted that in different figures, similar or identical elements are provided with the same reference signs or with reference signs, which are different from the corresponding reference signs only within the first digit.

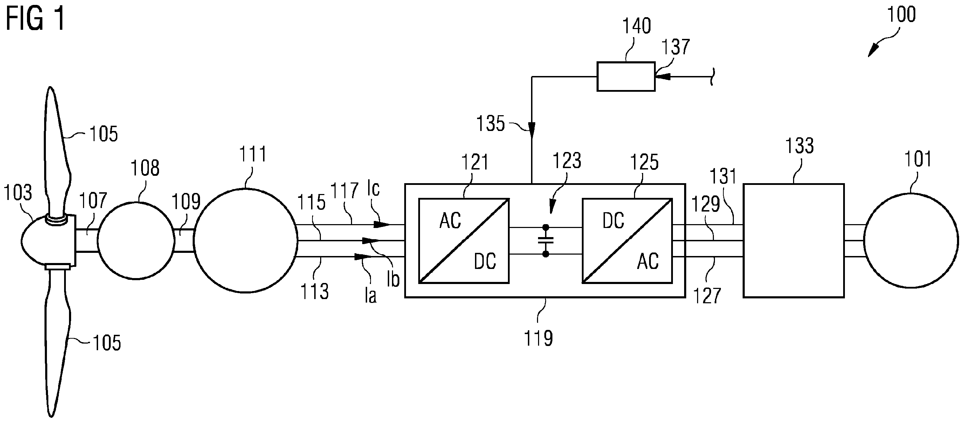

**Fig. 1** illustrates in a schematic form a wind turbine 100 which provides electric energy to a utility grid 101.

The wind turbine comprises a hub 103 to which plural rotor blades 105 are connected. The hub is mechanically connected to a main shaft 107 whose rotation is transformed by a gear box 108 to a rotation of a secondary shaft 109, wherein the gear box 108 may be optional. The main shaft 107 or the secondary shaft 109 drives a generator 111 which may be in particular a synchronous permanent magnet generator providing a power stream in the three phases or windings 113, 115 and 117 to a converter 119 which comprises a AC-DC portion 121, a DC-link 123 and a DC-AC portion 125 for transforming a variable AC power stream to a fixed frequency AC power stream which is provided in three phases or windings 127, 129, 131 to a wind turbine transformer 133 which transforms the output voltage to a higher voltage for transmission to the utility grid 101.

The converter 119 is controlled via a converter command 135 (Vdref, Vqref) which is derived and supplied from a control arrangement 150 according to an embodiment of the present invention, which receives at least one input signal 137, such as a microphone signal, stator winding currents and one or more reference values or one or more quantities indicative of the operation of the generator 111 or any component of the wind turbine 100.

The generator in Fig. 1 comprises a single three-phase stator winding or multiple three-phase stator windings. Thereby, the winding 113 carries the stator current $I_a$, the winding 115 carries the stator current $I_b$ and the winding 117 carries the stator current $I_c$. The control arrangement 160 controls the converter 119.

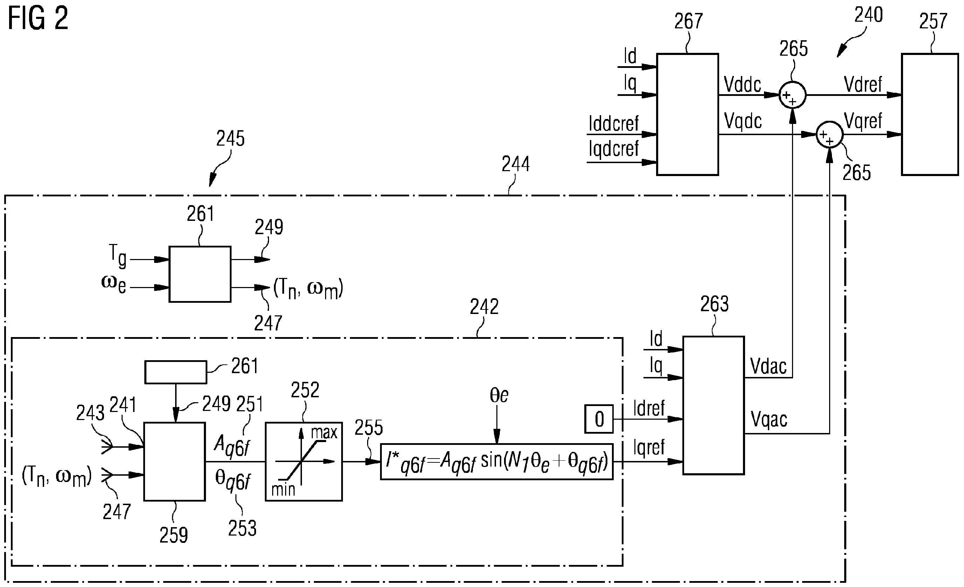

**Fig. 2** schematically illustrates an arrangement for controlling a generator, for example the generator 111 as illustrated in Fig. 1, to reduce a harmonic torque ripple according to an embodiment of the present invention.

The arrangement 240 illustrated in Fig. 2 comprises an input port 241 for receiving a vibration signal 243 indicating a measured mechanic vibration of the generator, for example generator 111 illustrated in Fig. 1. Furthermore, the arrangement 240 comprises a processor 245 which is adapted to determine a value 247 of an operating point of the generator, for example represented by the two values ($T_n$, $\omega_m$), one of a plurality of predetermined fundamental torques and one of a plurality of predetermined rotational speeds of the generator.

The processor 245 is further adapted to derive, based on the vibration signal 243 and the value 247 of the operating point, an amplitude 251 (e.g. $A_{q6f}$ for a 6th harmonic of the basic or fundamental frequency f) and a phase 253 (for example $\Theta_{q6f}$, for the 6th harmonic of the fundamental frequency) of a reference harmonic current (for example $I_{q6f}$ for a reference current of a 6th harmonic), wherein the harmonic current is also indicated by reference sign 255.

Further, the arrangement 240 comprises a driver 257 (e.g. configured as converter 119 in Fig. 1) which is adapted to inject a current into the generator based on the reference harmonic current 255.

For performing these functions, the arrangement 240 comprises an auto-tuning controller 259 which receives the vibration signal 243 as well as the value 247 of the load point and further receives an enable signal 249 which is derived by a load point detection module 261 which derives the value of the load point 247 based on the torque $T_g$ of the generator and the electrical frequency $\omega_e$ of the electric generator.

The reference harmonic current is labelled in Fig. 2 also as Iqref, i.e. a harmonic current reference or a q-component of a harmonic current reference.

The arrangement 240 further comprises a harmonic current regulator 263 which receives (e.g. a representation of) the reference harmonic current 255 (Iqref) as well as the d-component Idref of the reference harmonic current which is usually zero. Furthermore, the harmonic current regulator 263 receives the currents Id, Iq (derived e.g. from Ia, Ib, Ic by Transformation into the dq-system) of at least one set of stator windings of the generator, such as generator 111. The d-component and the q-component of the stator current are for example derived based on the three phase currents Ia, Ib, Ic by performing a park transformation.

The harmonic current regulator 263 comprises circuitry to derive from the input values a reference harmonic voltage Vdac, Vqac, i.e. components in the d/q-coordinate system which are supplied to addition elements 265. Using the addition elements 265, a sum of a reference fundamental voltage Vddc, Vqdc with the reference harmonic voltage Vdac, Vqac is calculated and output as a reference voltage Vdref, Vqref which is supplied to the driver 257, which may for example be configured as a converter.

**Fig. 2** shows the torque ripple controller 244 which is used in the direct drive permanent magnet synchronous generator. The harmonic current references on the d- and q-axes are given into the harmonic current regulator for minimizing the torque ripple in the generator. In the harmonic current reference calculation module, the harmonic current reference on the d-axis is set as 0; the harmonic current reference on the q-axis is given as a harmonic sinusoidal signal, the amplitude and phase angle of this signal are both obtained by the auto tuning controller.

In Fig. 2, the load point detection module will give the enable/disable signal and the load point information (Tn, ωm) to the auto tuning controller. The scheme of load point detection can be expressed as:

$$\begin{cases} \left| T - T_1 \right| \leq \Delta T \\ \left| \omega - \omega_1 \right| \leq \Delta \omega \end{cases} \rightarrow Enable \, \& \left( T_1, \omega_1 \right)$$

$$\begin{cases} \left| T - T_1 \right| \leq \Delta T \\ \left| \omega - \omega_2 \right| \leq \Delta \omega \end{cases} \rightarrow Enable \, \& \left( T_1, \omega_2 \right)$$

$$\vdots$$

$$\begin{cases} \left| T - T_1 \right| \leq \Delta T \\ \left| \omega - \omega_m \right| \leq \Delta \omega \end{cases} \rightarrow Enable \, \& \left( T_1, \omega_m \right)$$

$$\vdots$$

$$\begin{cases} \left| T - T_n \right| \leq \Delta T \\ \left| \omega - \omega_m \right| \leq \Delta \omega \end{cases} \rightarrow Enable \, \& \left( T_n, \omega_m \right)$$

The arrangement 240 comprises the harmonic current reference calculation module 242 which harbours the auto-tuning controller and the limitation element 252.

The arrangement 240 further comprises a fundamental current regulator 267 which receives the stator winding currents Id, Iq as well as fundamental current references Iddcref, Iqdcref based on which the fundamental voltage references Vddc, Vqdc are calculated.

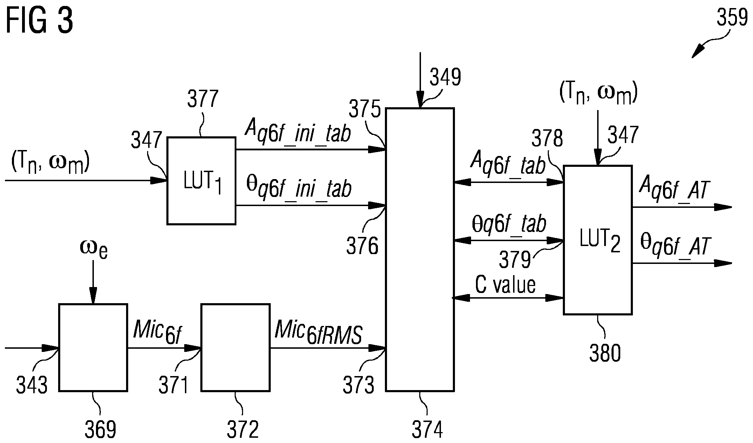

**Fig. 3** schematically illustrates an embodiment of an auto-tuning controller 359 according to an embodiment of the present invention, which may for example be comprised in the harmonic current reference calculation module 242 of the arrangement 240 illustrated in Fig. 2.

The auto-tuning controller 359 illustrated in Fig. 3 further comprises a bandpass filter 369 which filters out frequency components of the vibration signal 343 and generates a filtered vibration signal 371 in which undesired frequency components are reduced. The auto-tuning controller 359 further comprises an averaging module 372 which receives the filter vibration signal and outputs an average filtered vibration signal 373 which is input to an auto-tuning scheme module 374.

The value 347 of the load point is used to access initial amplitude 375 and an initial phase 376 which are associated with the value of the load point 347. Therefore, a look-up table 377 is used, in which initial values of amplitude and phase are electronically stored associated with particular values of the load point. The auto-tuning scheme module 374 performs an optimization of the amplitude and phase based on the initial amplitude 375 and initial phase 276 and outputs an optimized amplitude 378 and an optimized phase 379 which are stored in another look-up table 380 in association with the value 347 of the load point.

When the auto tuning controller is enabled, the torque ripple controller parameters in LUT1 for the single load point (Tn, ωm) will be tuned according to the feedback (e.g. microphone). The tuning result will be saved into LUT2 as the available table used by torque ripple controller, as shown in Fig. 3.

When the generator is operating at a specific stable load point, i.e. $|T-T_n| \leq \Delta T$ and $|\omega-\omega_m| \leq \Delta \omega$, the auto tuning

scheme will enable and start to optimize the phase angle and amplitude at that load point.

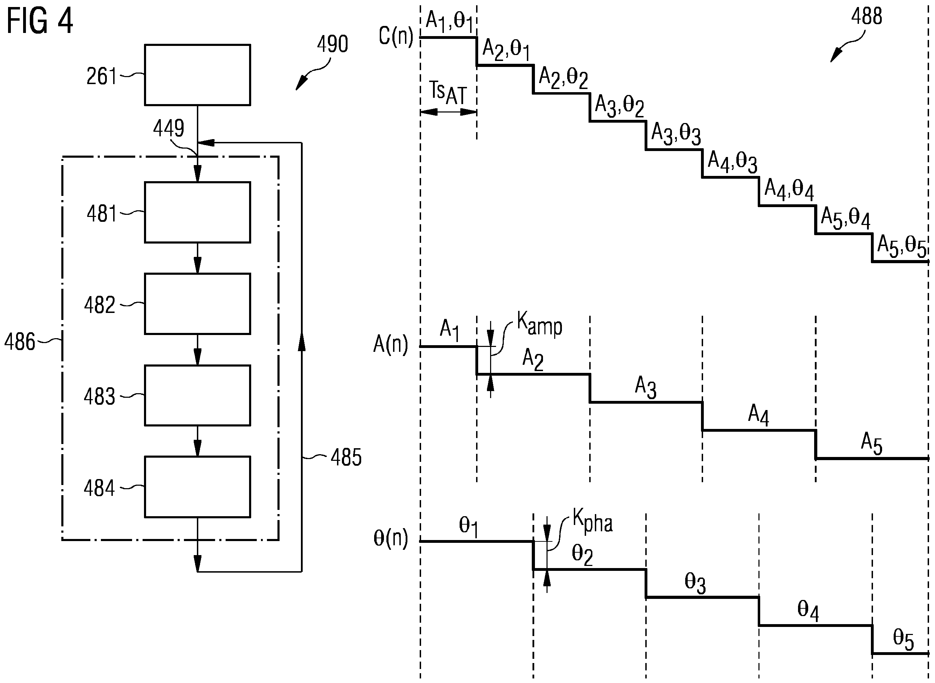

The flow diagram of auto tuning scheme can be illustrated as **Fig. 4.** Thereby, Fig. 4 schematically illustrates a procedure performed by the auto-tuning scheme module 374 illustrated in Fig. 3.

The procedure 490 illustrates method steps of the auto-tuning scheme. In the procedure 490, the enable signal 449 is received. If the enable signal is assured, first in one tuning step (which may last for example between 0.5 s to 10 s, in particular between 0.5 s and 2 s), an optimization of the amplitude is first performed in a method step 481. After that, the look-up table 380 is updated in a method step 482. After this, in a method step 483, an optimization of the phase angle is performed and using the result, the look-up table 380 is updated in a method step 484. This process continues, as is indicated by the loop 485, until the enable signal 449 is not assured. One tuning cycle 486 may take e.g. between 1 s and 3 s, in particular 2 s.

The scheme 488 illustrates the evolvement of the different quantities, i.e. the amplitude A(n) and phase Θ(n) as well as the vibration signal which is filtered and averaged, and denoted as C(n). As can be appreciated from the scheme 488, the vibration signal decreases while the optimizations are carried out.

The tuning schemes for the amplitude and phase angle can be expressed as:

Amplitude auto tuning equations:

$$\Delta A(n) = A(n) - A(n-1)$$

$$\Delta C_A(n) = C_A(n) - C_A(n-1)$$

$$A(n+1) = A(n) - K_{amp} * sign(\Delta A(n) * \Delta C_A(n))$$

where $A(n)$ and $A(n\text{-}1)$ are the amplitude of harmonic current at the time interval $n$ and previous time interval $n\text{-}1$, respectively. $C_A(n)$ and $C_A(n\text{-}1)$ are the RMS values of the microphone 6f harmonic at the time interval $n$ and previous time interval $n\text{-}1$ for the amplitude change, respectively. $K_{amp}$ is the gain of the step change for amplitude.

Phase auto tuning equations:

$$\Delta\theta(n) = \theta(n) - \theta(n-1)$$

$$\Delta C_\theta(n) = C_\theta(n) - C_\theta(n-1)$$

$$\theta(n+1) = \theta(n) - K_{pha} * sign(\Delta\theta(n) * \Delta C_\theta(n))$$

where $\theta(n)$ and $\theta(n\text{-}1)$ are the phase angle of harmonic current at the time interval $n$ and previous time interval $n\text{-}1$, respectively. $C_\theta(n)$ and $C_\theta(n\text{-}1)$ are the RMS values of the microphone 6f harmonic at the time interval $n$ and previous time interval $n\text{-}1$ for the phase angle change, respectively. $K_{pha}$ is the gain of the step change for angular position.

The initial values of phase angle and amplitude are from LUT-1. When the phase angle and amplitude are tuned successfully for each step, the updated values $A(n)$ and $\theta(n)$ will be saved to LUT2.

Embodiments of the present invention may achieve:

- Optimizes the parameters using in the torque ripple controller LUT in real-time
- Handles different generator operating conditions.
- Has no additional cost
- Has no change requirement for hardware of available products
- Suitable for a long term operation of torque ripple controller

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of controlling a generator (111) to reduce a harmonic torque ripple, the method comprising:

      measuring or estimating a mechanic vibration or other signals indicating mechanic vibration of the generator (111) to obtain a vibration signal (243), wherein the mechanic vibration comprises one or more higher harmonics of a fundamental electrical frequency of the generator;
      determining a value (247) of an operating point of the generator (111), wherein the value (247) of the operating point is determined based on a fundamental torque (Tg) and a rotational speed (we) of the generator;
      deriving, based on the vibration signal (243) and the value (247) of the operating point, an amplitude (251) and a phase (253) of a reference harmonic current (Iqref);
      injecting a current into the generator (111) based on the reference harmonic current (Iqref),

   wherein the value (247) of the operating point is determined:

      by examining a torque difference between the fundamental torque (Tg) and at least one of a plurality of predetermined fundamental torques (Tm) in a predefined period and
      by examining a speed difference between the rotational speed (we) and at least one of a plurality of predetermined rotational speeds ($\omega$m) in a predefined period,

   the method further comprising:

      assuring an enable signal (249), if an absolute value of the torque difference is smaller than a predetermined torque difference ($\Delta$T) for a predefined period and if an absolute value of the speed difference is smaller than a predetermined speed difference ($\Delta\omega$) for a predefined period,
      wherein deriving the amplitude and the phase of the reference harmonic current comprises:

         filtering the vibration signal (343) thereby reducing components of the vibration signal other than a particular harmonic to obtain a filtered vibration signal (371);
         looking up an initial amplitude (375) and an initial phase (376) associated with the value of the operating point from a storage (377);
         performing an optimization (490) of the amplitude and phase based on the initial amplitude and the initial phase so that the vibration signal (C(n), 373, 343) is reduced; and
         storing, associated with the value of the operating point, the optimized amplitude (378) and optimized phase (379) in a look-up table (380),
         wherein the optimization (490) comprises to perform a loop (485) until the enable signal (449) is not assured, each tuning cycle of the loop comprising:

            first an optimization of the amplitude is performed (481);
            then a look-up table (380) is updated (482);
            then an optimization of the phase angle is performed (483);
            then the look-up table (380) is updated.

2. Method according to claim 1, performed repeatedly over time when the generator is producing power.

3. Method according to one of the preceding claims, wherein the value (247) of the operating point is determined based the measured fundamental torque (Tg) is measured and the rotational speed (we) of the generator is measured.

4. Method according to one of the preceding claims, wherein the value (247) of the operating point is **characterized:**

      **by** that one predetermined fundamental torque (Tm) of the plurality of predetermined fundamental torques for which the absolute value of the torque difference is smaller than the predetermined torque difference and
      by that one predetermined rotational speed ($\omega$n) of the plurality of predetermined rotational speeds for which the absolute value of the speed difference is smaller than the predetermined speed difference.

5. Method according to one of the preceding claims, further comprising:
   time averaging the RMS value (C(n)) of the filtered vibration signal.

6. Method according to the preceding claim, wherein performing the optimization comprises:

performing an optimization (481) of the amplitude starting from the initial amplitude using a gradient scheme aiming to reduce, in particular RMS value of, the filtered vibration signal; and
performing an optimization (483) of the phase starting from the initial phase using a gradient scheme aiming to reduce the filtered vibration signal (371, C(n)).

7. Method according to the one of the preceding claims, wherein performing the optimization of the amplitude and/or phase continues, if the enable signal is assured, over a time duration longer than a delay of the vibration signal, wherein during the time duration the vibration signal is received repeatedly.

8. Method according to the one of the preceding claims, wherein, if the value of the operating point changes, during performing the optimization of the amplitude and/or phase, from a first value to a second value, the optimizations associated to the first value of the operating point are terminated and a last value of the amplitude and a last value of the phase obtained by the optimizations are stored in the storage.

9. Method according to the preceding claim, further comprising:

performing optimizations of the amplitude and/or phase associated with the second value of the operating point and/or
applying a limitation (252) of the optimized amplitude and/or phase.

10. Method according to one of the preceding claims, wherein injecting the current into the generator comprises:

determining a reference harmonic voltage (Vdac, Vqac) based on the reference harmonic current (Iqref, Idref) and an actual current (Id, Iq) in at least one stator winding, each the reference harmonic current and the actual current in particular represented by components in a dq-coordinate system,
forming a sum (Vdref, Vqref) of the reference harmonic voltage and a reference fundamental voltage; and
supplying the sum as reference voltage to a control input of a converter (119) having power input terminals connected to power output terminals of the generator (111).

11. Method according to one of the preceding claims, further comprising:

determining the reference fundamental voltage (Vddc, Vqdc) based on the actual current (Id, Iq) in the at least one stator winding of the generator and a reference fundamental current (Iddcref, Iqdcref); and/or
wherein the vibration signal is generated by a microphone and/or a strain gauge.

12. Arrangement (240) for controlling a generator (111) to reduce a harmonic torque ripple, the arrangement comprising:

an input port (241) for receiving a vibration signal (243) indicating a measured mechanic vibration of the generator, wherein the mechanic vibration comprises one or more higher harmonics of a fundamental electrical frequency of the generator;
a processor (245) adapted

to determine a value (247) of an operating point of the generator;
to derive, based on the vibration signal (243) and the value (247) of the operating point, an amplitude (251) and a phase (253) of a reference harmonic current; and

a driver (257) adapted to inject a current into the generator based on the reference harmonic current,

wherein the value (247) of the operating point is determined:

by examining a torque difference between the fundamental torque (Tg) and at least one of a plurality of predetermined fundamental torques (Tm) in a predefined period and
by examining a speed difference between the rotational speed (we) and at least one of a plurality of predetermined rotational speeds ($\omega$m) in a predefined period,

the method further comprising:

assuring an enable signal (249), if an absolute value of the torque difference is smaller than a predetermined torque difference (∆T) for a predefined period and if an absolute value of the speed difference is smaller than a predetermined speed difference (∆ω) for a predefined period,
wherein deriving the amplitude and the phase of the reference harmonic current comprises:

> filtering the vibration signal (343) thereby reducing components of the vibration signal other than a particular harmonic to obtain a filtered vibration signal (371);
> looking up an initial amplitude (375) and an initial phase (376) associated with the value of the operating point from a storage (377);
> performing an optimization (490) of the amplitude and phase based on the initial amplitude and the initial phase so that the vibration signal (C(n), 373, 343) is reduced; and
> storing, associated with the value of the operating point, the optimized amplitude (378) and optimized phase (379) in a look-up table (380),
> wherein the optimization (490) comprises to perform a loop (485) until the enable signal (449) is not assured, each tuning cycle of the loop comprising:

>> first an optimization of the amplitude is performed (481);
>> then a look-up table (380) is updated (482);
>> then an optimization of the phase angle is performed (483);

> then the look-up table (380) is updated.

**13.** Wind turbine (100), comprising:

> a shaft (107) with rotor blades (105) connected thereto;
> a generator (111) mechanically coupled with the shaft; and
> an arrangement (140, 240) according to the preceding claim, the driver in particular configured as a converter that is controlled based on the reference harmonic current.

**Patentansprüche**

**1.** Verfahren zur Steuerung eines Generators (111), um eine harmonische Drehmomentwelligkeit zu reduzieren, wobei das Verfahren Folgendes umfasst:

> Messen oder Schätzen mechanischer Schwingungen oder anderer Signale, die auf mechanische Schwingungen des Generators (111) hindeuten, um ein Schwingungssignal (243) zu erhalten, wobei die mechanischen Schwingungen eine oder mehrere höhere Harmonische einer Grundfrequenz des Generators umfassen;
> Bestimmen eines Wertes (247) eines Betriebspunktes des Generators (111), wobei der Wert (247) des Betriebspunktes basierend auf einem Grunddrehmoment (Tg) und einer Drehzahl (ωe) des Generators bestimmt wird;
> Ableiten einer Amplitude (251) und einer Phase (253) eines Referenz-Oberschwingungsstroms (Iqref) basierend auf dem Schwingungssignal (243) und dem Wert (247) des Betriebspunktes;
> Einspeisen eines Stroms in den Generator (111) basierend auf dem Referenz-Oberschwingungsstrom (Iqref), wobei der Wert (247) des Betriebspunktes bestimmt wird:

>> durch Untersuchen einer Drehmomentdifferenz zwischen dem Grunddrehmoment (Tg) und mindestens einem einer Vielzahl von vorbestimmten Grunddrehmomenten (Tm) in einem vorbestimmten Zeitraum und durch Untersuchen einer Drehzahldifferenz zwischen der Drehzahl (ωe) und mindestens einer aus einer Vielzahl von vorbestimmten Drehzahlen (ωm) in einem vorbestimmten Zeitraum,
>> wobei das Verfahren ferner umfasst:

>>> Sicherstellen eines Freigabesignals (249), wenn ein Absolutwert der Drehmomentdifferenz für einen vordefinierten Zeitraum kleiner als eine vorgegebene Drehmomentdifferenz (∆T) ist und wenn ein Absolutwert der Drehzahldifferenz für einen vordefinierten Zeitraum kleiner als eine vorgegebene Drehzahldifferenz (∆ω) ist,
>>> wobei das Ableiten der Amplitude und der Phase des Referenz-Oberschwingungsstroms umfasst:

>>>> Filtern des Schwingungssignals (343), wodurch andere Komponenten des Schwingungssignals als eine bestimmte Oberschwingung reduziert werden, um ein gefiltertes Schwingungssignal (371) zu erhalten;

Nachschlagen einer anfänglichen Amplitude (375) und einer anfänglichen Phase (376), die dem Wert des Betriebspunktes zugeordnet sind, aus einem Speicher (377);

Durchführen einer Optimierung (490) der Amplitude und Phase basierend auf der anfänglichen Amplitude und der anfänglichen Phase, sodass das Schwingungssignal (C(n), 373, 343) reduziert wird; und

Speichern der optimierten Amplitude (378) und der optimierten Phase (379), die dem Wert des Betriebspunktes zugeordnet sind, in einer Nachschlagetabelle (380),

wobei die Optimierung (490) das Durchführen einer Schleife (485) umfasst, bis das Freigabesignal (449) nicht mehr sichergestellt wird, wobei jeder Abstimmzyklus der Schleife umfasst:

zuerst wird eine Optimierung der Amplitude durchgeführt (481);
dann wird eine Nachschlagetabelle (380) aktualisiert (482);
dann wird eine Optimierung des Phasenwinkels durchgeführt (483);
dann wird die Nachschlagetabelle (380) aktualisiert.

2. Verfahren gemäß Anspruch 1, das beim Erzeugen von Strom durch den Generator im Laufe der Zeit wiederholt durchgeführt wird.

3. Verfahren gemäß einem der vorhergehenden Ansprüche, wobei der Wert (247) des Betriebspunktes basierend auf dem gemessenen Grunddrehmoment (Tg) bestimmt und die Drehzahl ($\omega$e) des Generators gemessen wird.

4. Verfahren gemäß einem der vorhergehenden Ansprüche, wobei der Wert (247) des Betriebspunktes **gekennzeichnet ist:**

**durch** das eine vorgegebene Grunddrehmoment (Tm) der Vielzahl von vorgegebenen Grunddrehmomenten, für das der Absolutwert der Drehmomentdifferenz kleiner als die vorgegebene Drehmomentdifferenz ist, und
**durch** die eine vorgegebene Drehzahl ($\omega$n) der Vielzahl von vorgegebenen Drehzahlen, für die der Absolutwert der Drehzahldifferenz kleiner als die vorgegebene Drehzahldifferenz ist.

5. Verfahren gemäß einem der vorhergehenden Ansprüche, ferner umfassend:
zeitliche Mittelung des Effektivwertes (C(n)) des gefilterten Schwingungssignals.

6. Verfahren gemäß dem vorhergehenden Anspruch, wobei das Durchführen der Optimierung umfasst:

Durchführen einer Optimierung (481) der Amplitude ausgehend von der anfänglichen Amplitude unter Verwendung eines Gradientenschemas mit dem Ziel, insbesondere den Effektivwert des gefilterten Schwingungssignals zu reduzieren; und
Durchführen einer Optimierung (483) der Phase ausgehend von der anfänglichen Phase unter Verwendung eines Gradientenschemas mit dem Ziel, das gefilterte Schwingungssignal (371, C(n)) zu reduzieren.

7. Verfahren gemäß einem der vorhergehenden Ansprüche, wobei das Durchführen der Optimierung der Amplitude und/oder Phase, wenn das Freigabesignal sichergestellt ist, über einen Zeitraum andauert, der länger als eine Verzögerung des Schwingungssignals ist, wobei während des Zeitraums das Schwingungssignal wiederholt empfangen wird.

8. Verfahren gemäß einem der vorhergehenden Ansprüche, wobei, wenn sich der Wert des Betriebspunktes während des Durchführens der Optimierung der Amplitude und/oder der Phase von einem ersten Wert zu einem zweiten Wert ändert, die dem ersten Wert des Betriebspunktes zugeordneten Optimierungen beendet werden und ein letzter Wert der Amplitude und ein letzter Wert der Phase, die durch die Optimierungen erhalten wurden, im Speicher abgelegt werden.

9. Verfahren gemäß dem vorhergehenden Anspruch, ferner umfassend:
Durchführen von Optimierungen der Amplitude und/oder Phase, die dem zweiten Wert des Betriebspunktes zugeordnet sind, und/oder Anwenden einer Begrenzung (252) der optimierten Amplitude und/oder Phase.

10. Verfahren gemäß einem der vorhergehenden Ansprüche, wobei das Einspeisen des Stroms in den Generator umfasst:

Bestimmen einer Referenz-Oberschwingungsspannung (Vdac, Vqac) basierend auf dem Referenz-Oberschwingungsstrom (Iqref, Idref) und einem Ist-Strom (Id, Iq) in mindestens einer Statorwicklung, wobei der Referenz-Oberschwingungsstrom und der Ist-Strom jeweils insbesondere durch Komponenten in einem dq-Koordinatensystem dargestellt werden,

Bilden einer Summe (Vdref, Vqref) aus der Referenz-Oberschwingungsspannung und einer Referenz-Grundspannung; und

Zuführen der Summe als Referenzspannung an einen Steuereingang eines Umrichters (119), der Leistungseingangsanschlüsse aufweist, die mit Leistungsausgangsanschlüssen des Generators (111) verbunden sind.

11. Verfahren gemäß einem der vorhergehenden Ansprüche, ferner umfassend:

Bestimmen der Referenz-Grundspannung (Vddc, Vqdc) basierend auf dem Ist-Strom (Id, Iq) in der mindestens einen Statorwicklung des Generators und einem Referenz-Grundstrom (Iddcref, Iqdcref); und/oder

wobei das Schwingungssignal durch ein Mikrofon und/oder einen Dehnungsmessstreifen erzeugt wird.

12. Anordnung (240) zur Steuerung eines Generators (111), um eine harmonische Drehmomentwelligkeit zu reduzieren, wobei die Anordnung umfasst:

einen Eingangsanschluss (241) zum Empfangen eines Schwingungssignals (243), das auf eine gemessene mechanische Schwingung des Generators hinweist, wobei die mechanische Schwingung eine oder mehrere höhere Oberschwingungen einer elektrischen Grundfrequenz des Generators umfasst;

einen Prozessor (245), der dazu eingerichtet ist,

einen Wert (247) für einen Betriebspunkt des Generators zu bestimmen;

basierend auf dem Schwingungssignal (243) und dem Wert (247) des Betriebspunktes eine Amplitude (251) und eine Phase (253) eines Referenz-Oberschwingungsstroms (Iqref) abzuleiten; und

einen Treiber (257), der dazu eingerichtet ist, einen Strom in den Generator basierend auf dem Referenz-Oberschwingungsstrom einzuspeisen, wobei der Wert (247) des Betriebspunkts bestimmt wird:

durch Untersuchen einer Drehmomentdifferenz zwischen dem Grunddrehmoment (Tg) und mindestens einem einer Vielzahl von vorbestimmten Grunddrehmomenten (Tm) in einem vorbestimmten Zeitraum und durch Untersuchen einer Drehzahldifferenz zwischen der Drehzahl ($\omega$e) und mindestens einer aus einer Vielzahl von vorbestimmten Drehzahlen ($\omega$m) in einem vorbestimmten Zeitraum,

wobei das Verfahren ferner umfasst:

Sicherstellen eines Freigabesignals (249), wenn ein Absolutwert der Drehmomentdifferenz für einen vordefinierten Zeitraum kleiner als eine vorgegebene Drehmomentdifferenz ($\Delta$T) ist und wenn ein Absolutwert der Drehzahldifferenz für einen vordefinierten Zeitraum kleiner als eine vorgegebene Drehzahldifferenz ($\Delta\omega$) ist,

wobei das Ableiten der Amplitude und der Phase des Referenz-Oberschwingungsstroms umfasst:

Filtern des Schwingungssignals (343), wodurch andere Komponenten des Schwingungssignals als eine bestimmte Oberschwingung reduziert werden, um ein gefiltertes Schwingungssignal (371) zu erhalten;

Nachschlagen einer anfänglichen Amplitude (375) und einer anfänglichen Phase (376), die dem Wert des Betriebspunktes zugeordnet sind, aus einem Speicher (377);

Durchführen einer Optimierung (490) der Amplitude und Phase basierend auf der anfänglichen Amplitude und der anfänglichen Phase, sodass das Schwingungssignal (C(n), 373, 343) reduziert wird; und

Speichern der optimierten Amplitude (378) und der optimierten Phase (379), die dem Wert des Betriebspunktes zugeordnet sind, in einer Nachschlagetabelle (380),

wobei die Optimierung (490) das Durchführen einer Schleife (485) umfasst, bis das Freigabesignal (449) nicht mehr sichergestellt wird, wobei jeder Abstimmzyklus der Schleife umfasst:

zuerst wird eine Optimierung der Amplitude durchgeführt (481);

dann wird eine Nachschlagetabelle (380) aktualisiert (482);

dann wird eine Optimierung des Phasenwinkels durchgeführt (483);

dann wird die Nachschlagetabelle (380) aktualisiert.

**13.** Windturbine (100), umfassend:

eine Welle (107) mit daran verbundenen Rotorblättern (105);
einen Generator (111), der mechanisch mit der Welle gekoppelt ist; und
eine Anordnung (140, 240) gemäß dem vorhergehenden Anspruch, wobei der Treiber insbesondere als Umrichter ausgelegt ist, der basierend auf dem Referenz-Oberschwingungsstrom gesteuert wird.

**Revendications**

**1.** Procédé de commande d'un générateur (111) permettant de réduire une ondulation de couple harmonique, le procédé comprenant :

la mesure ou l'estimation d'une vibration mécanique ou d'autres signaux indiquant une vibration mécanique du générateur (111) afin d'obtenir un signal de vibration (243), dans lequel la vibration mécanique comprend une ou plusieurs harmoniques supérieures d'une fréquence électrique fondamentale du générateur ;
la détermination d'une valeur (247) d'un point opérationnel du générateur (111), dans lequel la valeur (247) du point opérationnel est déterminée sur la base d'un couple fondamental (Tg) et d'une vitesse de rotation (ωe) du générateur ;
l'obtention, sur la base du signal de vibration (243) et de la valeur (247) du point opérationnel, d'une amplitude (251) et d'une phase (253) d'un courant harmonique de référence (Iqref) ;
l'injection d'un courant dans le générateur (111) sur la base du courant harmonique de référence (Iqref),
dans lequel la valeur (247) du point opérationnel est déterminée :

en examinant une différence de couple entre le couple fondamental (Tg) et au moins un d'une pluralité de couples fondamentaux prédéterminés (Tm) sur une période prédéfinie, et
en examinant une différence de vitesse entre la vitesse de rotation (ωe) et au moins une d'une pluralité de vitesses de rotation prédéterminées (ωm) sur une période prédéfinie,
le procédé comprenant en outre :

l'assurance d'un signal d'activation (249), si une valeur absolue de la différence de couple est inférieure à une différence de couple prédéterminée (ΔT) sur une période prédéfinie et si une valeur absolue de la différence de vitesse est inférieure à une différence de vitesse prédéterminée (Δω) sur une période prédéfinie,
dans lequel l'obtention de l'amplitude et de la phase du courant harmonique de référence comprend :

le filtrage du signal de vibration (343) en réduisant ainsi des composants du signal de vibration autres qu'une harmonique particulière afin d'obtenir un signal de vibration filtré (371) ;
la consultation d'une amplitude initiale (375) et d'une phase initiale (376) associées à la valeur du point opérationnel dans une mémoire (377) ;
la réalisation d'une optimisation (490) de l'amplitude et de la phase sur la base de l'amplitude initiale et de la phase initiale de sorte que le signal de vibration (C(n), 373, 343) soit réduit ; et
le stockage, associé à la valeur du point opérationnel, de l'amplitude optimisée (378) et de la phase optimisée (379) dans une table de consultation (380),
dans lequel l'optimisation (490) comprend la réalisation d'un circuit (485) tant que le signal d'activation (449) n'est pas assuré, chaque cycle de réglage du circuit comprenant :

tout d'abord une optimisation de l'amplitude est réalisée (481) ;
puis une table de consultation (380) est mise à jour (482) ;
puis une optimisation de l'angle de phase est réalisée (483) ;
puis la table de consultation (380) est mise à jour.

**2.** Procédé selon la revendication 1, réalisé de manière répétée au fil du temps lorsque le générateur produit de l'énergie.

**3.** Procédé selon l'une quelconque des revendications précédentes, dans lequel la valeur (247) du point opérationnel est déterminée sur la base du couple fondamental mesuré (Tg) qui est mesuré et de la vitesse de rotation (ωe) du générateur qui est mesurée.

4. Procédé selon l'une quelconque des revendications précédentes, dans lequel la valeur (247) du point opérationnel est **caractérisée :**

par ce couple fondamental prédéterminé (Tm) de la pluralité de couples fondamentaux prédéterminée pour lequel la valeur absolue de la différence de couple est inférieure à la différence de couple prédéterminée, et par cette vitesse de rotation prédéterminée (ωm) de la pluralité de vitesses de rotation prédéterminées pour laquelle la valeur absolue de la différence de vitesse est inférieure à la différence de vitesse prédéterminée.

5. Procédé selon l'une quelconque des revendications précédentes, comprenant en outre :
le calcul de la moyenne dans le temps de la valeur RMS (C(n)) du signal de vibration filtré.

6. Procédé selon la revendication précédente, dans lequel la réalisation de l'optimisation comprend :

la réalisation d'une optimisation (481) de l'amplitude débutant depuis l'amplitude initiale en utilisant un programme de gradient visant à réduire, en particulier une valeur RMS du signal de vibration filtré ; et
la réalisation d'une optimisation (483) de la phase débutant depuis la phase initiale en utilisant un programme de gradient visant à réduire le signal de vibration filtré (371, C(n)).

7. Procédé selon l'une quelconque des revendications précédentes, dans lequel la réalisation de l'optimisation de l'amplitude et/ou de la phase continue, si le signal d'activation est assuré, sur un laps de temps plus long qu'un retard du signal de vibration, dans lequel, pendant la durée, le signal de vibration est reçu de manière répétée.

8. Procédé selon l'une quelconque des revendications précédentes, dans lequel, si la valeur du point opérationnel change, pendant la réalisation de l'optimisation de l'amplitude et/ou de la phase, d'une première valeur à une deuxième valeur, les optimisations associées à la première valeur du point opérationnel sont terminées et une dernière valeur de l'amplitude et une dernière valeur de la phase obtenues par les optimisations sont stockées dans la mémoire.

9. Procédé selon la revendication précédente, comprenant en outre :

la réalisation d'une optimisation de l'amplitude et/ou de la phase associées à la deuxième valeur du point opérationnel ; et/ou
l'application d'une limitation (252) de l'amplitude et/ou de la phase optimisée.

10. Procédé selon l'une quelconque des revendications précédentes, dans lequel l'injection de courant dans le générateur comprend :

la détermination d'une tension harmonique de référence (Vdac, Vqac) basée sur le courant harmonique de référence (Iqref, Idref) et un courant effectif (Id, Iq) dans au moins un enroulement de stator, chacun du courant harmonique de référence et du courant effectif en particulier étant représentés par des composants dans un système de coordonnées dq,
la formation d'une somme (Vdref, Vqref) de la tension harmonique de référence et d'une tension fondamentale de référence ; et
la fourniture de la somme en tant que tension de référence à une entrée de commande d'un convertisseur (119) présentant des bornes d'entrée d'alimentation connectées à des bornes de sortie d'alimentation du générateur (111).

11. Procédé selon l'une quelconque des revendications précédentes comprenant en outre :

la détermination de la tension fondamentale de référence (Vddc, Vqdc) basée sur le courant effectif (Id, Iq) dans le au moins un enroulement de stator du générateur et un courant fondamental de référence (Iddcref, Iqdcref) ; et/ou
dans lequel le signal de vibration est généré par un microphone et/ou une jauge de contrainte.

12. Arrangement (240) permettant de commander un générateur (111) afin de réduire une ondulation de couple harmonique, l'arrangement comprenant :

un orifice d'entrée (241) permettant de recevoir un signal de vibration (243) indiquant une vibration mécanique mesurée du générateur, dans lequel la vibration mécanique comprend une ou plusieurs harmoniques supérieures d'une fréquence électrique fondamentale du générateur ;

un processeur (245) adapté :

afin de déterminer une valeur (247) d'un point opérationnel du générateur ;

afin d'obtenir, sur la base du signal de vibration (243) et de la valeur (247) du point opérationnel, une amplitude (251) et une phase (253) d'un courant harmonique de référence ; et

un système de commande (257) adapté afin d'injecter un courant dans le générateur sur la base du courant harmonique de référence,

dans lequel la valeur (247) du point opérationnel est déterminée :

en examinant une différence de couple entre le couple fondamental (Tg) et au moins un d'une pluralité de couples fondamentaux prédéterminés (Tm) sur une période prédéfinie, et

en examinant une différence de vitesse entre la vitesse de rotation (ωe) et au moins une d'une pluralité de vitesses de rotation prédéterminée (ωm) sur une période prédéfinie,

le procédé comprenant en outre :

l'assurance d'un signal d'activation (249), si une valeur absolue de la différence de couple est inférieure à une différence de couple prédéterminée (Δt) sur une période prédéfinie et si une valeur absolue de la différence de vitesse est inférieure à une différence de vitesse prédéterminée (Δω) sur une période prédéfinie,

dans lequel l'obtention de l'amplitude et de la phase du courant harmonique de référence comprend :

la filtration du signal de vibration (343) en réduisant ainsi les composants du signal de vibration autres qu'une harmonique particulière afin d'obtenir un signal de vibration filtré (371) ;

la consultation d'une amplitude initiale (375) et d'une phase initiale (376) associée à la valeur du point opérationnel dans une mémoire (377) ;

la réalisation d'une optimisation (490) de l'amplitude et de la phase sur la base de l'amplitude initiale et de la phase initiale de sorte que le signal de vibration (C(n), 373, 343) soit réduit ; et

le stockage, associé à la valeur du point opérationnel, de l'amplitude optimisée (378) et de la phase optimisée (379) dans la table de consultation (380),

dans lequel l'optimisation (490) comprend la réalisation d'un circuit (485) tant que le signal d'activation (449) n'est pas assuré, chaque cycle de réglage du circuit comprenant :

tout d'abord une optimisation de l'amplitude est réalisée (481) ;

puis une table de consultation (380) est mise à jour (482) ;

ensuite une optimisation de l'angle de phase est réalisée (483) ;

et ensuite la table de consultation (380) est mise à jour.

**13.** Éolienne (100), comprenant :

un mât (107) avec des pales de rotor (105) raccordées à celui-ci ;

un générateur (111) mécaniquement couplé au mât ; et

un arrangement (140, 240) selon la revendication précédente, le dispositif de commande en particulier étant configuré comme un convertisseur qui est commandé sur la base du courant harmonique de référence.

FIG 1

FIG 2

# FIG 3

FIG 4

**EP 3 297 156 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2552013 A1
- EP 1643122 A2
- EP 0239806 A1